# EUROPEAN PATENT APPLICATION

(11) **EP 2 590 178 A1**
(43) Date of publication of application: **08.05.2013**
(21) Application number: 11305952.1
(22) Date of filing: 21.07.2011
(51) Int. Cl.: H01B 3/00, E21B 47/12, G02B 6/44

(54) **Equipment and methods for deploying line in a wellbore**

(71) Applicant: Services Pétroliers Schlumberger, 75007 Paris (FR); Schlumberger Technology B.V., 2514 The Hague (NL); Schlumberger Holdings Limited, Tortola (VG); Prad Research Development Limited, Tortola (VG)
(72) Inventor: Vigneaux, Pierre, 92142 Clamart (FR)
(74) Representative: Vandermolen, Mathieu

(57) **Abstract**

Many wellbore service operations involve placing a line in the wellbore. The line may be used to transmit power to downhole tools, convey signals from downhole-measurement instruments, or both. A problem associated with such operations involves drag forces experienced by the line as process fluids flow through the well, particularly the interior of a tubular body such as casing. The drag forces may cause the line to fail. Magnetizing the line solves this problem. During deployment, the line will migrate and become attached to the casing. Drag forces are significantly reduced because the line is no longer surrounded by moving fluid.

## Description

### BACKGROUND

The statements in this section merely provide background information related to the present disclosure and may not constitute prior art.

This disclosure is related in general to well bore-telemetry technology. In particular, this disclosure relates to improved equipment and methods for deploying line in a wellbore.

In recent years, the deployment of fiber lines in subterranean wellbores has become increasingly frequent. The most common application is to install optical fiber as a conduit through which various downhole measurements may be performed. Such measurements include temperature, pressure, pH, density, resistivity, conductivity, salinity, carbon dioxide concentration, asphaltene concentration, etc. Today, optical-fiber technologies may be employed throughout the lifetime of a well-drilling and completion, stimulation, production surveillance and even after abandonment.

Optical fiber may be deployed in several ways. For example, the fiber line may be preinstalled in equipment and tools and lowered into the well, it may be pumped downhole such that it unfurls as it follows the fluid down the well, and it may be lowered into the wellbore in the same manner as a wireline. It is also desirable to perform some of the aforementioned measurements during well cementing operations.

After a well is drilled, the conventional practice in the oil and gas industry consists of lining the well with a metal casing. An annular area is thus formed between the casing and the subterranean formation. A cementing operation is then conducted with the goal of filling the annular area with cement slurry. After the cement sets, the combination of casing and set cement strengthens the wellbore and provides hydraulic isolation between producing zones through which the well penetrates.

A thorough discussion of the primary cementing process may be found in the following publication: Piot B. and Cuvillier G.: "Primary Cementing," in Nelson E.B. and Guillot D. (eds.): Well Cementing-2nd Edition, Houston: Schlumberger (2006): 459-501.

Optical fiber line may be deployed during primary cementing by attaching it to a wiper plug. A number of methods have been described. One method involves a spool of fiber line, with one end of the fiber connected to the wiper plug. The spool remains at the top of the well, either inside or outside the wellhead. The spool dispenses fiber line as the wiper plug travels through the casing string. A second method attaches the fiber-line spool to the wiper plug, with one end of the fiber attached to the wellhead. The spool unfurls fiber as the plug travels through the casing string.

Both methods described above pose difficulties. If the fiber line is fixed at the top of the well, fluids pumped into the well at the wellhead may exert a drag force that can break the fiber. The drag force may be exacerbated by the high velocity of fluids falling in vacuum inside the casing due to a U-tubing effect. If the fiber is fixed on the wiper plug and deployed from surface, it may not have sufficient tensile strength to withstand high plug velocities. These problems are magnified as the length of the casing string increases.

Despite the valuable contributions from the art, it would still be advantageous to be able to deploy fiber lines more reliably.

### SUMMARY

The present disclosure reveals improved materials and methods for fiber deployment.

In an aspect, embodiments relate to systems that convey signals.

In a further aspect, embodiments relate to systems for deploying a line in a subterranean wellbore.

In yet a further aspect, embodiments relate to methods for deploying lines in a subterranean wellbore.

In yet a further aspect, embodiments relate to methods for performing measurements in a subterranean well.

### BRIEF DESCRIPTION OF THE DRAWINGS

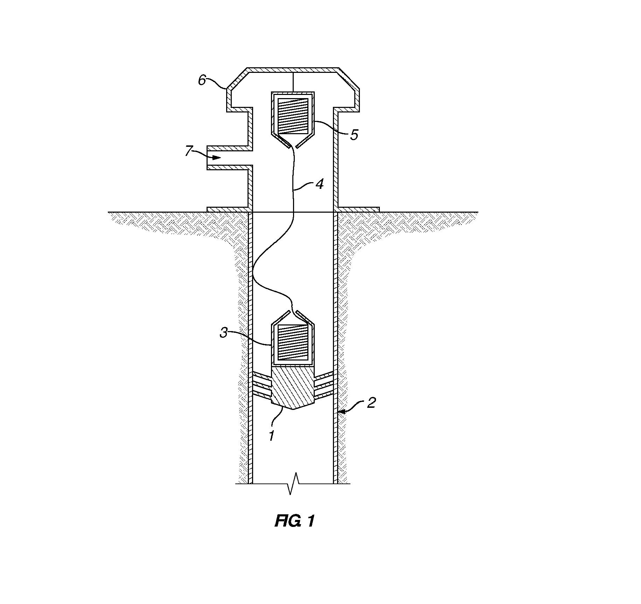

Figure 1 is an illustration of embodiments of the disclosure, wherein a magnetized line is dispensed from two independent apparatuses.

### DETAILED DESCRIPTION

The disclosure may pertain to the treatment of vertical wells, but is equally applicable to wells of any orientation. The disclosure may pertain to hydrocarbon production wells, but it is to be understood that the disclosure may also be applicable to wells for production of other fluids, such as water or carbon dioxide or, for example, for geothermal wells, injection, or storage wells. This disclosure may be applicable to offshore and land wells. It should also be understood that throughout this specification, when a concentration or amount range is described as being useful, or suitable, or the like, it is intended that any and every concentration or amount within the range, including the end points, is to be considered as having been stated. Furthermore, each numerical value should be read once as modified by the term "about" (unless already expressly so modified) and then read again as not to be so modified unless otherwise stated in context. For example, "a range of from 1 to 10" is to be read as indicating each and every possible number along the continuum between about 1 and about 10. In other words, when a certain range is expressed, even if only a few specific data points are explicitly identified or referred to within the range, or even when no data points are referred to within the range, it is to be understood that the Applicant appreciates and understands that any and all data points within the range are to be considered to have been specified, and that the inventor has possession of the entire range and all points within the range.

Those skilled in the art will appreciate that the term "line" is applicable to fiber, wire, rope and the like. In addition, a line may comprise one or more strands of material.

During the course of many well-service operations, process fluids are pumped into the wellbore, recovered from the wellbore, or both. The well-service operations include, but are not limited to, drilling, cementing, gravel packing, acidizing and hydraulic fracturing. In the context of this disclosure, process fluids include (but are not limited to) drilling fluids, cement slurries, spacer fluids, chemical washes, completion fluids, acidizing fluids, fracturing fluids, gravel-pack fluids and displacement fluids.

Operators frequently install lines in the wellbore before, during and after well-service operations. The lines may comprise electrical conductors, optical fibers or both. The lines may be used to provide electrical power to tools installed downhole, convey signals to surface from measurement instruments installed downhole, or both. The tools may deliver energy in the form of one or more in the list comprising: electricity, heat, acoustic waves, magnetic fields, microwaves, gamma rays, x-rays and neutrons. Some instruments may also measure one or more wellbore parameters, including (but not limited to) temperature, pressure, distance, pH, density, resistivity, conductivity, salinity, carbon dioxide concentration and asphaltene concentration. The measured information may be transmitted as signals to surface via one or more optical fibers. Such information allows operators to directly monitor the progress of a well-service operation.

As stated earlier, fibers or lines installed inside a tubular body in a subterranean well are subject to drag forces exerted by fluids flowing through the tubular body. Such drag forces can cause fiber or line breakage, severing the conduit by which the operator provides power to downhole devices, monitors downhole parameters or both. The drag forces may be minimized if the fibers or lines become attached to the interior surface of the tubular body. Under these circumstances, the drag force exerted by the fluid will be countered by friction forces between the tubular body and the line.

The Applicant has surprisingly discovered that, during deployment, a magnetized line or fiber will become attached to the interior surface of a tubular body, provided the tubular body comprises a material that responds to a magnetic field. Most tubular bodies installed in a subterranean well are made of carbon steel-a highly magnetic material. The Applicant has also discovered that a magnetizable line or fiber may be constructed by incorporating magnetizable particles in the protective jacket surrounding the line or fiber.

Embodiments relate to systems that convey signals. The signals may be in the form of electrical impulses or light. The system comprises a signal-conveyance medium. The medium is a line comprising one or more electrical conductors such as a wire, one or more optical fibers, or a combination of electrical conductors and optical fibers. The electrical conductors and fibers may be in separate strands that operate independently. The line may further comprise sensors, preferably distributed along the length of the line, and enabling one to monitor one or more measurement parameters along the length of the tubular body.

The line is surrounded by a protective jacket embedded with magnetizable particles. The particles preferably comprise one or more ferromagnetic materials. Suitable ferromagnetic materials include, but are not limited to, chromium (IV) oxide, cobalt, dysprosium, ferrite, gadolinium, gallium manganese arsenide, iron, magnetite, neodymium-boron, nickel, permalloy, samarium-cobalt, suessite, yttrium iron garnet, or combinations thereof. Of these, ferrite is most preferred. The particle size of the ferromagnetic materials is preferably between 5 and 50 micrometers, and more preferably between 10 and 20 micrometers. The ferromagnetic-particle concentration in the protective jacket is preferably between about 5% and 66% by volume, more preferably between about 5% and 50% by volume and most preferably between about 5% and 20% by volume. The thickness of the protective jacket is preferably between about 30 to 75 micrometers, and more preferably between about 40 to 50 micrometers.

Means for magnetizing the particles embedded in the protective jacket may comprise a magnetic coil around which the line is wrapped. When the line is deployed in the subterranean well, it may exhibit a regular succession of positive and negative poles.

Embodiments relate to systems for deploying a line in a subterranean wellbore. The systems comprise a device that travels down the tubular body inside the wellbore. The device may be, but would not be limited to, a plug, a dart, a ball, a bomb, a sonde or a canister. The systems further comprise an apparatus for dispensing the line, the line comprising a signal-conveyance medium surrounded by a protective jacket embedded with magnetizable particles. The line may be dispensed from a spool. The line is preferably continuous and connected to the device. The systems also comprise means for magnetizing the particles.

The medium is a line comprising one or more electrical conductors such as a wire, one or more optical fibers, or a combination of electrical conductors and optical fibers. The electrical conductors and fibers may be in separate strands that operate independently.

The line is surrounded by a protective jacket embedded with magnetizable particles. The particles preferably comprise one or more ferromagnetic materials. Suitable ferromagnetic materials include, but are not limited to, chromium (IV) oxide, cobalt, dysprosium, ferrite, gadolinium, gallium manganese arsenide, iron, magnetite, neodymium-boron, nickel, permalloy, samarium-cobalt, suessite, yttrium iron garnet, or combinations thereof. Of these, ferrite is most preferred. The particle size of the ferromagnetic materials is preferably between 5 and 50 micrometers, and more preferably between 10 and 20 micrometers. The ferromagnetic-particle concentration in the protective jacket is preferably between about 5% and 66% by volume, more preferably between about 5% and 50% by volume and most preferably between about 5% and 20% by volume. The thickness of the protective jacket is preferably between about 30 to 75 micrometers, and more preferably between about 40 to 50 micrometers.

Means for magnetizing the particles embedded in the protective jacket may comprise a magnetic coil around which the line is wrapped. When the line is deployed in the subterranean well, it will exhibit a regular succession of positive and negative poles.

In embodiment, there are three principal elements. The first element is the device that travels down a tubular body inside the subterranean wellbore. In this embodiment, the first element is presented as a wiper plug; however, those skilled in the art will appreciate that other devices such as sondes, darts, balls, canisters, bombs and the like would be equally appropriate. The second element is a first apparatus for dispensing line, comprising a first reel of line comprising the signal-conveyance medium. The reel may further comprise the means for magnetizing the particles-it may contain the aforementioned magnetic coil. The line is attached to the wiper plug, and is able to be unwound from the first reel of the first apparatus as the wiper plug travels through the tubular body. The third element is a second apparatus for dispensing line, comprising a second reel of line. The line wound around both the first and second apparatuses is one continuous line. The second apparatus is installed at a location away from the device; however, line from the second reel may also be unwound as the device travels through the tubular body. In this way, stress on the line is minimized during deployment. Those skilled in the art will recognize that the line may comprise a bundle of individual strands, each strand having the ability to operate independently. For example, one or more strands may transmit measurement data, while other strands may transmit power to operate tools located downhole.

Figure 1 is an illustration of embodiments of the present disclosure. The first element, in this case a wiper plug **1,** is installed in a tubular body **2.** The second element, a first apparatus **3** for dispensing line, is attached to the wiper plug **1.** The magnetizable line **4** is continuous between the first device **3** and the third element— the second apparatus **5** for dispensing line. In this embodiment, the third element is fixed inside a wellhead **6.** As process fluid **7** is pumped into the wellhead, the wiper plug **1** and second element **3** travel through the tubular body **2,** away from the third element. Each dispensing device (**3** and **5**) may deploy line **4** simultaneously as the wiper plug **1** travels through the tubular body; therefore, because the path of least resistance will be followed, stress on the line during deployment is minimized. The magnetized line **4** migrates and becomes attached to the tubular body **2**.

Alternate embodiments may not feature two line-dispensing apparatuses; instead, one apparatus may be fixed at the surface-outside or inside the wellhead. Or, one apparatus may be fixed on the wiper plug or other device.

Process fluid **7** may comprise (but not be limited to) drilling fluid, cement slurry, spacer fluid, chemical wash, completion fluid, acidizing fluid, fracturing fluid, gravel-pack fluid and displacement fluid.

The wiper plug **1** may contain a chemical substance that may be released at some point during its displacement through the tubular body **2**.

One or more instruments may be attached to the wiper plug **1**, the instruments measuring one or more parameters in the list comprising: temperature, pressure, distance, pH, density, resistivity, conductivity, salinity, carbon dioxide concentration and asphaltene concentration.

The line **4** may deliver power to tools that emit energy in the form of one or more types in the list comprising: electricity, heat, acoustic waves, magnetic fields, microwaves, gamma rays, x-rays and neutrons. The line **4** may also comprise one or more strands, each strand able to operate independently. The line may further comprise sensors, preferably distributed along the length of the line, and enabling one to monitor one or more measurement parameters along the tubular body.

Embodiments relate to methods for deploying a line in a subterranean wellbore. A continuous line is selected, wherein the line comprises a signal-conveyance medium and a protective jacket surrounding the conveyance medium. The conveyance medium comprises at least one electrical conductor, or at least one optical fiber, or both. The electrical conductors and fibers may be in separate strands that operate independently. Magnetizable particles are embedded in the protective jacket. Prior to or during a well bore-service treatment, the particles are magnetized, preferably in an alternating and regular positive-negative-positive configuration.

The line is continuous, and is attached to a device that travels through a tubular body in the wellbore. Both are inserted into the tubular body. A process fluid is pumped into the wellhead, the device is released and begins to travel through the tubular body. As pumping continues, the line is dispensed into the wellbore and becomes magnetically attached to the interior surface of the tubular body.

The particles preferably comprise one or more ferromagnetic materials. Suitable ferromagnetic materials include, but are not limited to, chromium (IV) oxide, cobalt, dysprosium, ferrite, gadolinium, gallium manganese arsenide, iron, magnetite, neodymium-boron, nickel, permalloy, samarium-cobalt, suessite, yttrium iron garnet, or combinations thereof. Of these, ferrite is most preferred. The particle size of the ferromagnetic materials is preferably between 5 and 50 micrometers, and more preferably between 10 and 20 micrometers. The ferromagnetic-particle concentration in the protective jacket is preferably between about 5% and 66% by volume, more preferably between about 5% and 50% by volume and most preferably between about 5% and 20% by volume. The thickness of the protective jacket is preferably between about 30 to 75 micrometers, and more preferably between about 40 to 50 micrometers.

Referring to Fig. 1, some embodiments comprise several steps. **A** continuous magnetizable line **4** is selected. The line may comprise one or more individual strands, each strand having the ability to operate independently. A portion of the line is wound around a first reel in a first apparatus **3** for dispensing line. The other portion of the line is wound around a second reel in a second apparatus 5 for dispensing line. The first apparatus **3** is attached to a wiper plug **1** that travels through a tubular body **2,** and the combination is inserted into the tubular body **2** connected to a wellhead **6.** The second apparatus **5** is fixed inside the wellhead **6** such that the first apparatus **3** may travel away in the tubular body **2** when the wiper plug **1** is released. Process fluid **7** is pumped into the wellhead **6,** releasing the wiper plug **1** and forcing the wiper plug to begin traveling through the tubular body **2.** Continued pumping of process fluid **7** allows the line **4** to unwind from the first apparatus **3,** the second apparatus **5** or both as the wiper plug **1** travels through the tubular body 2. Prior to or during deployment, the line **4** is magnetized. Preferably, alternating and regular positive-negative-positive poles exist along the line **4.** During deployment, the line migrates to the surface of the tubular body. The line-deployment process is complete when the wiper plug **1** lands on float equipment at the end of the tubular body **2.**

Alternate embodiments may not feature two line-dispensing apparatuses; instead, one apparatus may be fixed at the surface-outside or inside the wellhead. Or, one apparatus may be fixed on the wiper plug or other device.

Process fluid **7** may comprise (but not be limited to) drilling fluid, cement slurry, spacer fluid, chemical wash, completion fluid, acidizing fluid, fracturing fluid, gravel-pack fluid and displacement fluid.

The first element **1** may contain a chemical substance that may be released at some point during its displacement through the tubular body **2.**

The first element **1** may contain one or more instruments that measure one or more parameters in the list comprising: temperature, pressure, distance, pH, density, resistivity, conductivity, salinity, carbon dioxide concentration and asphaltene concentration.

The line **4** may supply power to downhole devices that deliver energy in the form of one or more in the list comprising: electricity, heat, acoustic waves, magnetic fields, microwaves, gamma rays, x-rays and neutrons. The line **4** may comprise one or more strands, each strand able to operate independently. The line may further comprise sensors, preferably distributed along the length of the line, and enabling one to monitor one or more measurement parameters along the tubular body.

Embodiments relate to methods for performing measurements in a subterranean wellbore. A continuous line is selected, wherein the line comprises a signal-conveyance medium and a protective jacket surrounding the conveyance medium. The conveyance medium comprises at least one electrical conductor, or at least one optical fiber, or both. The electrical conductors and fibers may be in separate strands that operate independently. Magnetizable particles are embedded in the protective jacket. Prior to or during a wellbore-service treatment, the particles are magnetized, preferably in an alternating and regular positive-negative-positive configuration. The line may further comprise sensors, preferably distributed along the length of the line, and enabling one to monitor one or more measurement parameters along the tubular body. For example, one may measure the temperature of the tubular body versus depth, and locate the top of the cement column in the annulus.

The line is continuous, and is attached to a device that travels through a tubular body in the wellbore. Both are inserted into the tubular body. A process fluid is pumped into the wellhead, the device is released and begins to travel through the tubular body. As pumping continues, the line is dispensed into the wellbore and becomes magnetically attached to the interior surface of the tubular body.

During deployment or after the device has landed at the bottom of the tubular body, measurements are performed. The measurement parameters may include, but would not be limited to, temperature, pressure, distance, pH, density, resistivity, conductivity, salinity, carbon dioxide concentration and asphaltene concentration. The measurements are then converted to one or more signals that may be transmitted through the line to the surface.

The particles preferably comprise one or more ferromagnetic materials. Suitable ferromagnetic materials include, but are not limited to, chromium (IV) oxide, cobalt, dysprosium, ferrite, gadolinium, gallium manganese arsenide, iron, magnetite, neodymium-boron, nickel, permalloy, samarium-cobalt, suessite, yttrium iron garnet, or combinations thereof. Of these, ferrite is most preferred. The particle size of the ferromagnetic materials is preferably between 5 and 50 micrometers, and more preferably between 10 and 20 micrometers. The ferromagnetic-particle concentration in the protective jacket is preferably between about 5% and 66% by volume, more preferably between about 5% and 50% by volume and most preferably between about 5% and 20% by volume. The thickness of the protective jacket is preferably between about 30 to 75 micrometers, and more preferably between about 40 to 50 micrometers.

Process fluid may comprise (but not be limited to) drilling fluid, cement slurry, spacer fluid, chemical wash, completion fluid, acidizing fluid, fracturing fluid, gravel-pack fluid and displacement fluid.

The device may contain a chemical substance that may be released at some point during its displacement through the tubular body.

The line may supply power to downhole tools that deliver energy in the form of one or more in the list comprising: electricity, heat, acoustic waves, magnetic fields, microwaves, gamma rays, x-rays and neutrons.

The line may comprise one or more strands, each strand able to operate independently.

The preceding description has been presented with reference to presently preferred embodiments of the disclosure. Persons skilled in the art and technology to which this disclosure pertains will appreciate that alterations and changes in the described structures and methods of operation can be practiced without meaningfully departing from the principle, and scope of this disclosure. Accordingly, the foregoing description should not be read as pertaining only to the precise structures described and shown in the accompanying drawings, but rather should be read as consistent with and as support for the following claims, which are to have their fullest and fairest scope.

## Claims

1. A system for conveying signals, comprising:
(i) a signal-conveyance medium comprising at least one electrical conductor or at least one optical fiber, or both;
(ii) a protective jacket surrounding the conveyance medium, comprising magnetizable particles; and
(iii) means for magnetizing the particles.

2. The system of claim 1, wherein the magnetizable particles are ferromagnetic.

3. The system of claim 1 or 2, wherein the magnetizable particles comprise chromium (IV) oxide, cobalt, dysprosium, ferrite, gadolinium, gallium manganese arsenide, iron, magnetite, neodymium-boron, nickel, permalloy, samarium-cobalt, suessite, yttrium iron garnet, or combinations thereof.

4. The system of any one of claims 1-3, wherein the magnetizable-particle concentration in the protective jacket is between about 5% and about 66% by volume.

5. The system of any one of claims 1-4, wherein the thickness of the protective layer is between about 30 and about 75 micrometers.

6. The system of any one of claims 1-5, further comprising sensors distributed along the length of the line.

7. A method for deploying a line in a subterranean well, comprising:
(i) selecting a continuous line, wherein the line comprises:
(a) a signal-conveyance medium comprising at least one electrical conductor or at least one optical fiber, or both; and
(b) a protective jacket surrounding the conveyance medium, comprising magnetizable particles;
(ii) magnetizing the particles in the protective layer;
(iii) attaching the line to a device that travels through a tubular body in the wellbore, and inserting both inside the tubular body;
(iv) pumping a process fluid into the wellhead, releasing the device, and allowing the device to begin traveling through the tubular body; and
(v) continuing to pump process fluid, allowing the line to extend and become magnetically attached to the tubular body as the device travels through the tubular body.

8. The method of claim 7, wherein the magnetizable particles are ferromagnetic.

9. The method of claim 7 or 8, wherein the magnetizable particles comprise chromium (IV) oxide, cobalt, dysprosium, ferrite, gadolinium, gallium manganese arsenide, iron, magnetite, neodymium-boron, nickel, permalloy, samarium-cobalt, suessite, yttrium iron garnet, or combinations thereof.

10. The method of any one of claims 7-9 wherein the magnetizable-particle concentration in the protective jacket is between about 5% and about 66% by volume.

11. The method of any one of claims 7-10, wherein the thickness of the protective layer is between about 30 and about 75 micrometers.

12. The method of any one of claims 7-11, wherein the device is a plug, dart, ball, bomb, sonde or canister.

13. The method of any one of claims 7-12, wherein the line comprises one or more strands, each strand able to operate independently.

14. The method of any one of claims 7-13, wherein the device contains one or more instruments that measure one or more parameters in the list comprising: temperature, pressure, distance, pH, density, resistivity, conductivity, salinity, carbon dioxide concentration and asphaltene concentration.

15. The method of any one of claims 7-14, wherein the line delivers power to tools that emit energy in the form of one or more types in the list comprising:
electricity, heat, acoustic waves, magnetic fields, microwaves, gamma rays, x-rays and neutrons.
